# EUROPÄISCHE PATENTSCHRIFT

(11) **EP 2 976 180 B1**
(45) Veröffentlichungstag und Bekanntmachung des Hinweises auf die Patenterteilung: **09.05.2018**
(21) Anmeldenummer: 14721188.2
(22) Anmeldetag: 18.03.2014
(51) Int. Cl.: B23P 15/10, B21K 1/18, B23K 26/282, B23K 26/32, F02F 3/00, B23K 15/00, F02F 3/22, F02F 3/28, B23K 101/00, B23K 103/04, B23K 103/00

(54) **VERFAHREN ZUR HERSTELLUNG EINES KOLBENS FÜR EINEN VERBRENNUNGSMOTOR**
METHOD FOR PRODUCING A PISTON FOR AN INTERNAL COMBUSTION ENGINE
PROCÉDÉ DE PRODUCTION D'UN PISTON POUR MOTEUR À COMBUSTION INTERNE

(30) Priorität: 18.03.2013 DE 102013004575; 28.08.2013 DE 102013014345
(43) Veröffentlichungstag der Anmeldung: 27.01.2016
(73) Patentinhaber: Mahle International GmbH, 70376 Stuttgart (DE)
(72) Erfinder: BERR, Gerhard, 71546 Aspach (DE); BOCZEK, Sascha-Oliver, 69234 Dielheim (DE); MÜLLER, Reiner, 78628 Rottweil (DE); SCHARP, Rainer, 71665 Vaihingen (DE)
(74) Vertreter: BRP Renaud & Partner mbB Rechtsanwälte Patentanwälte Steuerberater
(86) Internationale Anmeldenummer: PCT/DE2014/000138
(87) Internationale Veröffentlichungsnummer: WO 2014/146636

(56) Entgegenhaltungen:
- DE-A1-102007 061 601
- DE-A1-102011 013 067
- DE-A1-102011 013 141
- DE-A1-102011 100 521
- US-A1- 2012 037 111
- US-A1- 2012 080 004
- US-A1- 2012 222 644

## Beschreibung

Die vorliegende Erfindung betrifft ein Verfahren zur Herstellung eines Kolbens für einen Verbrennungsmotor, mit einem Kolbengrundkörper und einem Kolbenringteil, wobei der Kolbengrundkörper eine einen Dom aufweisende Verbrennungsmulde sowie mit Nabenbohrungen versehene Kolbennaben aufweist, welche über Laufflächen miteinander verbunden sind, wobei die Kolbenringpartie einen Kolbenboden, einen umlaufenden Feuersteg sowie eine umlaufende Ringpartie aufweist, und wobei der Kolbengrundkörper und die Kolbenringpartie einen umlaufenden Kühlkanal bilden.

Aus den deutschen Patentanmeldungen 10 2011 013 141 A1 und DE 10 2011 013 067 A1 ist ein Herstellungsverfahren für einen Kolben bekannt, wonach der Rohling des Kolbenoberteils im Bereich der gesamten Verbrennungsmulde fertig geschmiedet wird. Die Kontur der Verbrennungsmulde ist somit von der Nachbearbeitung ausgenommen.

Die DE 10 2011 100 512 A1 offenbart ein Verfahren nach dem Oberbegriff des Anspruchs 1.

Es hat sich jedoch gezeigt, dass die lokale Erwärmung des Kolbenkörpers während des Verschweißens der Rohlinge eine Gefügeveränderung sowie den Abbau von Spannungen im Werkstoff bewirkt, die dazu führen, dass sich die Geometrie der Verbrennungsmulde verändert. Daher kann das Volumen der Verbrennungsmulde im fertigen Kolben erheblich von den vorgegebenen Werten abweichen. Da die Verbrennungsmulde fertig geschmiedet ist, ist eine zusätzliche spanende Bearbeitung nicht mehr möglich. Dies gilt insbesondere für Verbrennungsmulden mit komplexen Geometrien.

Die Aufgabe der vorliegenden Erfindung besteht darin, ein gattungsgemäßes Verfahren so weiterzuentwickeln, dass auf möglichst einfache Weise das Volumen der Verbrennungsmulde im fertigen Kolben auch bei komplexen Geometrien innerhalb des vorgegebenen Toleranzbereichs liegt.

Die Lösung besteht darin, dass in Schritt a) bei der Herstellung des Rohlings des Kolbengrundkörpers die Kontur der Verbrennungsmulde außerhalb des Bereichs des Doms fertig hergestellt wird, dass überschüssiger Werkstoff im Bereich des Doms der Verbrennungsmulde gebildet wird, und dass in Schritt e) der überschüssige Werkstoff im Bereich des Doms der Verbrennungsmulde in einer solchen Menge entfernt wird, dass ein vorbestimmtes Volumen der Verbrennungsmulde resultiert.

Gegenstand der vorliegenden Erfindung ist ferner ein mittels des erfindungsgemäßen Verfahrens herstellbarer Kolben.

Das erfindungsgemäße Verfahren zeichnet sich dadurch aus, dass bei der Herstellung des Kolbengrundkörpers mittels Umformverfahren im Bereich des Doms der Verbrennungsmulde überschüssiger Werkstoff gebildet wird, während der verbleibende Bereich der Verbrennungsmulde fertig hergestellt wird, d.h. keinerlei Nachbearbeitung mehr bedarf. Durch das Entfernen einer bestimmten Menge des überschüssigen Werkstoffs kann das vorbestimmte Volumen der Verbrennungsmulde nach dem Verschweißen der Rohlinge maßgenau eingestellt werden, ohne in die Geometrie der Verbrennungsmulde außerhalb des Bereichs des Doms einzugreifen.

Vorteilhafte Weiterbildungen ergeben sich aus den Unteransprüchen.

Eine Weiterbildung des erfindungsgemäßen Verfahrens sieht vor, dass in Schritt e) zur Kontrolle des Volumens der Verbrennungsmulde während der Entfernung des überschüssigen Werkstoffs im Dombereich der aktuelle tiefste Punkt der Verbrennungsmulde erfasst wird und daran eine senkrecht zur Kolbenmittelachse verlaufende Ebene angelegt wird, welche als Ausgangspunkt für die Fertigbearbeitung des Kolbenbodens verwendet wird.

In Schritt c) werden zweckmäßigerweise Kühlkanalbereiche in die Rohlinge eingebracht und/oder fertig bearbeitet, da die Kühlkanalbereiche nach dem Verschweißen der Rohlinge nicht mehr zugänglich sind.

Es ist ferner von Vorteil, in Schritt c) im Rohling des Kolbengrundkörpers der Innenraum fertig zu bearbeiten und in den Kühlkanalbereich Zu- und Ablauföffnungen für Kühlöl einzubringen. Der Kolbengrundkörper ist zu diesem Zweck einfacher zu handhaben als der geschweißte Kolbenkörper.

Ferner empfiehlt es sich aus den gleichen Erwägungen, in Schritt c) am Rohling des Kolbengrundkörpers und/oder des Kolbenringteils den Außendurchmesser vorzubearbeiten und/oder am Rohling des Kolbenringteiles den Kolbenboden vorzubearbeiten und/oder am Rohling des Kolbengrundkörpers die Kolbennaben vorzubearbeiten.

Eine bevorzugte Weiterbildung sieht vor, dass in Schritt e) die Nabenbohrungen in die Kolbennaben eingebracht werden, nachdem der Kolbenboden fertig bearbeitet ist. Da sich die Kompressionshöhe eines Kolbens aus dem Abstand zwischen Kolbenboden und Mittelachse der Nabenbohrung ergibt, kann auf besondere einfache Weise die vorbestimmte Kompressionshöhe des fertigen Kolbens erzielt werden.

Es können verschiedene Umformverfahren zur Herstellung des Rohlings des Kolbengrundkörpers gewählt werden. Der Rohling kann mittels Warmumformen bei 1.200°C bis 1.300°C geschmiedet und anschließend kaltkalibriert werden. Der Rohling kann auch mittels Warmumformen bei 1.200°C bis 1.300°C geschmiedet und anschließend bei einer Temperatur von höchstens 150°C kaltumgeformt werden. Der Rohling kann ferner mittels Halbwarmumformen bei 600°C bis 900°C geschmiedet werden. Zusätzlich kann der im Anschluss an das Halbwarmumformen bei einer Temperatur von höchstens 150°C kaltumgeformt werden. Schließlich kann der Rohling mittels Kaltumformen bei höchstens 150°C geschmiedet werden.

Ausführungsbeispiele der vorliegenden Erfindung werden im Folgenden anhand der beigefügten Zeichnungen näher erläutert. Es zeigen in einer schematischen, nicht maßstabsgetreuen Darstellung:
- Figur 1: ein Ausführungsbeispiel eines mit dem erfindungsgemäßen Verfahren hergestellten Kolbens;
- Figur 2: ein erstes Ausführungsbeispiel je eines Rohlings eines Kolbengrundkörpers und eines Kolbenringteils für einen Kolben gemäß Figur 1;
- Figur 3: die Rohlinge gemäß Figur 2 nach erfolgter Vorbearbeitung;
- Figur 4: einen geschweißten Kolbenkörper aus den vorbearbeiteten Rohlingen gemäß Figur 3;
- Figur 5: ein weiteres Ausführungsbeispiels einen geschweißten Kolbenkörper mit einer weiteren Ausführungsform eines vorbearbeiteten Rohlings für das Kolbenunterteil.

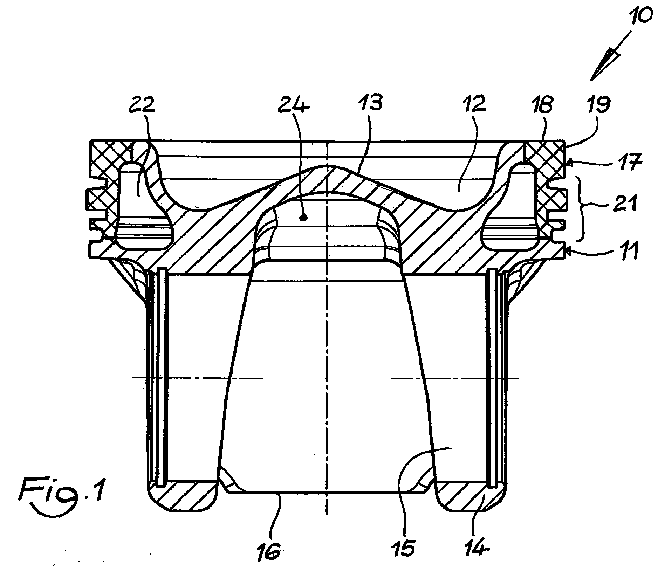

Figur 1 zeigt ein Ausführungsbeispiel eines erfindungsgemäßen Kolbens 10. Der Kolben 10 weist einen Kolbengrundkörper 11 mit einer einen zentralen Dom 13 versehenen Verbrennungsmulde 12 auf. Der Kolbengrundkörper 11 weist ferner in an sich bekannter Weise Kolbennaben 14 mit Nabenbohrungen 15 zur Aufnahme eines Kolbenbolzens (nicht dargestellt) und einen Innenraum 24 auf. Die Kolbennaben 14 sind über Laufflächen 16 miteinander verbunden.

Der Kolben 10 weist ferner ein Kolbenringteil 17 mit einem Kolbenboden 18, einem umlaufenden Feuersteg 19 und einer umlaufenden Ringpartie 21 mit Ringnuten zur Aufnahme von Kolbenringen (nicht dargestellt) auf. In Höhe der Ringpartie 21 ist ein umlaufender Kühlkanal 22 mit Zu- und Ablauföffnungen für Kühlöl (nicht dargestellt) vorgesehen.

Im vorliegenden Ausführungsbeispiel sind der Kolbengrundkörper 11 und das Kolbenringteil 17 mittels eines Schweißverfahrens, bspw. Elektronenstrahlschweißen oder Laserschweißen, miteinander verbunden.

Der Kolbengrundkörper 11 ist aus einem Werkstoff hergestellt, der einem Umformverfahren unterzogen werden kann. Typischerweise handelt es sich hierbei um einen Vergütungsstahl, bspw. 42CrMo4 oder einen AFP-Stahl wie 38MnVS6.

Erfindungsgemäß soll ein Kolben 10 hergestellt werden, dessen Verbrennungsmulde 12 ein Volumen innerhalb eines vorbestimmten Toleranzbereichs aufweist. Dieses Ziel soll unabhängig von der Geometrie der Verbrennungsmulde erreicht werden, so dass auch eine Verbrennungsmulde komplexer Geometrie nach Abschluss des Herstellungsverfahrens ein Volumen innerhalb des vorbestimmten Toleranzbereichs aufweist. Das erfindungsgemäße Ziel soll mittels des erfindungsgemäßen Verfahrens auch für Verbrennungsmulden erreicht werden, die gegenüber der Kolbenmittelachse radial versetzt oder geneigt angeordnet sind.

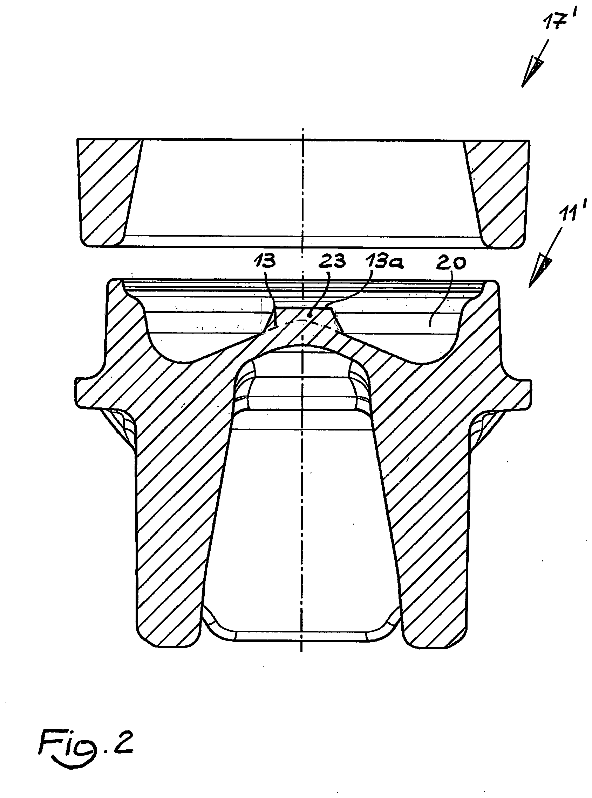

Zu diesem Zweck werden, wie in Figur 2 dargestellt, zunächst Rohlinge für den Kolbengrundkörper 11 und das Kolbenringteil 17 hergestellt. Der Rohling 11' für den Kolbengrundkörper 11 wurde im Ausführungsbeispiel mittels Warmumformen bei 1.200° bis 1.300° geschmiedet und durch anschließendes Kaltkalibrieren (Pressen der Oberflächen des Rohlings 11' bei Raumtemperatur) weiterbearbeitet.

Im Ausführungsbeispiel ist die Geometrie der Verbrennungsmulde 12 mit Ausnahme des Dombereichs 13a rund um den Dom 13 fertig geschmiedet. Das bedeutet, dass zur Herstellung der fertigen Kolbens 10 keinerlei Nachbearbeitung der Verbrennungsmulde 12 mit Ausnahme des Dombereichs 13a erforderlich ist.

Wesentlich ist, dass der Dombereich 13a nach dem Schmieden eine ausreichende Menge überschüssigen Werkstoffs 23 aufweist, um das Volumen der Verbrennungsmulde 12 erfindungsgemäß maßgenau einzustellen (siehe dazu weiter unten).

Ein Rohling 17' des Kolbenringteils 17 kann aus jedem geeigneten Werkstoff bspw. durch Umformen oder Gießen hergestellt werden.

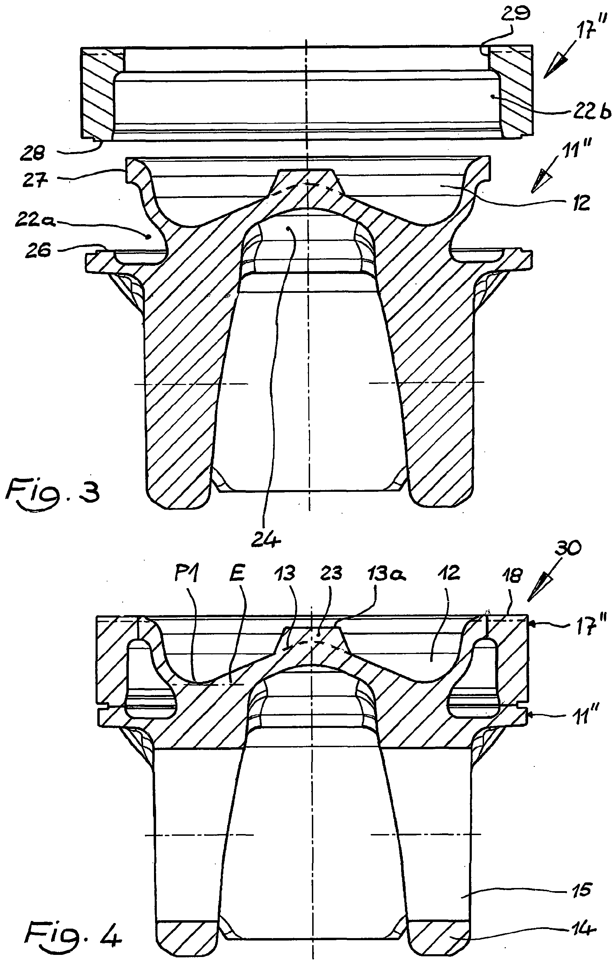

Wie es in Figur 3 dargestellt ist, können nach dem Schmieden die Rohlinge 11', 17' zu bearbeiteten Rohlingen 11", 17" vorbearbeitet werden. An beiden Rohlingen 11', 17' kann bspw. der Außendurchmesser vorbearbeitet werden.

Am Rohling 11' für den Kolbengrundkörper 11 kann auch der Nabenbereich vorbearbeitet werden. Schließlich kann der Innenraum 24 fertig bearbeitet werden. Außerdem wird ein Kühlkanalbereich 22a, der im fertigen Kolben 10 einen Teil des Kühlkanals 22 bildet, in den Rohling 11' eingearbeitet. Der Kühlkanalbereich 22a kann auch während des Schmiedens eingebracht werden und wird in diesem Fall nach dem Schmieden fertigbearbeitet. In den Kühlkanalbereich 22a werden die Zu- und Ablauföffnungen für Kühlöl eingebracht.

Am Rohling 17' für das Kolbenringteil 17 wird bspw. ein Kühlkanalbereich 22b, der im fertigen Kolben 10 einen Teil des Kühlkanals 22 bildet, in den Rohling 17' eingearbeitet.

Schließlich werden nach dem Schmieden in beiden Rohlingen 11', 17' die Schweißflächen 26, 27 bzw. 28, 29, über welche die Rohlinge 11', 17' miteinander verbunden werden sollen, fertigbearbeitet.

Nun werden die Rohlinge 11", 17" mittels eines geeigneten Schweißverfahrens über ihre Schweißflächen 26 und 28 bzw. 27 und 29 in an sich bekannter Weise zu einem Kolbenkörper 30 miteinander verbunden, wie er in Figur 4 dargestellt ist. Hierbei führt das Schweißverfahren zu einer lokalen Erwärmung des Werkstoffes im Bereich der Schweißflächen 26 und 28 bzw. 27 und 29. Diese lokale Erwärmung bewirkt eine Gefügeveränderung sowie den Abbau von Spannungen im Werkstoff. Dies führt in der Regel dazu, dass die Geometrie und damit das Volumen der Verbrennungsmulde 12 nunmehr erheblich von den für den fertigen Kolben 10 vorgegebenen Werten abweichen.

In einem nächsten Verfahrensschritt wird nun an dem aus dem Verschweißen resultierenden Kolbenkörper 30 der Dombereich 13a nachbearbeitet, indem der überschüssige Werkstoff 23 entfernt wird. Dies geschieht in einem solchen Maß, dass dadurch das vorbestimmte Volumen der Verbrennungsmulde 12 nach dem Verschweißen der Rohlinge 11", 17" maßgenau eingestellt wird, ohne in die Geometrie der Verbrennungsmulde 11 außerhalb des Dombereichs 13a einzugreifen. Der verbleibende Bereich der Verbrennungsmulde 12 ist bereits durch das Umformverfahren fertig hergestellt wird, d.h. er bedarf keinerlei Nachbearbeitung mehr.

Da der Kolbenboden 18 erst nach dem Entfernen des überschüssige Werkstoffs 23 im Dombereich 13a fertig bearbeitet wird, wird zur Kontrolle des Volumens der Verbrennungsmulde 12 während der Entfernung des überschüssigen Werkstoffs 23 im Dombereich 13a der aktuelle tiefste Punkt P1 der Verbrennungsmulde 12 erfasst und daran eine senkrecht zur Kolbenmittelachse verlaufende Ebene E angelegt, welche als Ausgangspunkt für die Fertigbearbeitung des Kolbenbodens 18 verwendet wird.

Zum Abschluss des erfindungsgemäßen Verfahrens wird der Kolbenkörper 30 fertig bearbeitet, indem bspw. die endgültige Feinkontur hergestellt und die Ringnuten in die Ringpartie 21 sowie die Nabenbohrungen 15 in die Kolbennaben 14 eingebracht werden. Die Nabenbohrungen 15 werden derart eingebracht, dass sich aus ihrer Mittelachse in Bezug auf den Kolbenboden 18 die vorbestimmte Kompressionshöhe des fertigen Kolbens ergibt. Im Ergebnis wird ein Kolben gemäß Figur 1 erhalten.

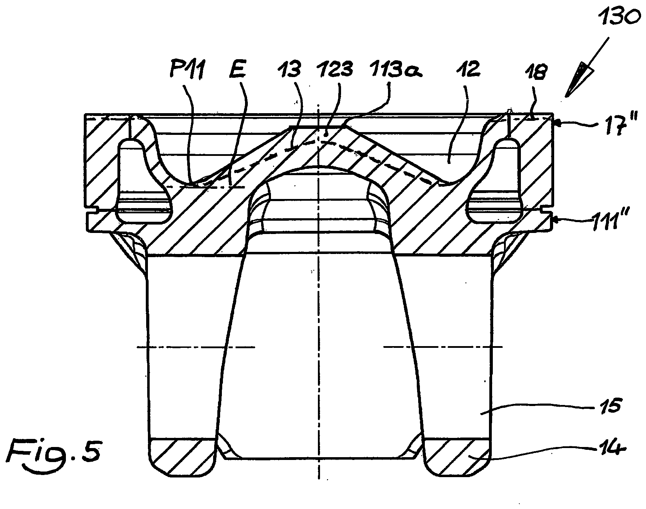

Figur 5 zeigt einen Kolbenkörper 130 aus einem bearbeiteten Rohling 17" für das Kolbenringteil 17 gemäß dem ersten Ausführungsbeispiel nach den Figuren 1 bis 4 sowie aus einem bearbeiteten Rohling 111" für den Kolbengrundkörper 11, der sich von dem Rohling 11' gemäß dem ersten Ausführungsbeispiel nach den Figuren 1 bis 4 unterscheidet. Für gemeinsame Strukturen der beiden Ausführungsbeispiele des Kolbenkörpers 30, 130 werden gleiche Bezugszeichen verwendet, und insoweit wird auf die Beschreibung zu den Figuren 1 bis 4 verwiesen.

Der bearbeitete Rohling 111" für den Kolbengrundkörper 11 wird hergestellt, wie es für das Ausführungsbeispiel gemäß den Figuren 1 bis 4 beschrieben wurde. Das Verbinden der bearbeiteten Rohlinge 111", 17" erfolgt wie für das Ausführungsbeispiel gemäß den Figuren 1 bis 4 beschrieben.

Auch bei diesem Ausführungsbeispiel ist die Geometrie der Verbrennungsmulde 12 mit Ausnahme des Dombereichs 113a fertig geschmiedet. Der wesentliche Unterschied zu dem Ausführungsbeispiel gemäß den Figuren 1 bis 4 besteht darin, dass sich der Dombereich 113a von der Spitze des Doms 13 bis zum tiefsten Punkt P11 der Verbrennungsmulde 13 erstreckt. Das bedeutet, dass zur Herstellung des fertigen Kolbens 10 keinerlei Nachbearbeitung der Verbrennungsmulde 12 mit Ausnahme des Dombereichs 113a erforderlich ist.

Auch bei diesem Ausführungsbeispiel wird an dem aus dem Verschweißen resultierenden Kolbenkörper 130 der Dombereich 113a nachbearbeitet, indem der überschüssige Werkstoff 123 entfernt wird. Dies geschieht in einem solchen Maß, dass dadurch das vorbestimmte Volumen der Verbrennungsmulde 12 nach dem Verschweißen der Rohlinge 111", 17" maßgenau eingestellt wird, ohne in die Geometrie der Verbrennungsmulde 11 außerhalb des Dombereichs 113a einzugreifen. Der verbleibende Bereich der Verbrennungsmulde 12 ist bereits durch das Umformverfahren fertig hergestellt wird, d.h. er bedarf keinerlei Nachbearbeitung mehr.

Da der Kolbenboden 18 erst nach dem Entfernen des überschüssige Werkstoffs 123 im Dombereich 113a fertig bearbeitet wird, wird zur Kontrolle des Volumens der Verbrennungsmulde 12 während der Entfernung des überschüssigen Werkstoffs 123 im Dombereich 113a der aktuelle tiefste Punkt P11 der Verbrennungsmulde 12 erfasst und daran eine senkrecht zur Kolbenmittelachse verlaufende Ebene E angelegt, welche als Ausgangspunkt für die Fertigbearbeitung des Kolbenbodens 18 verwendet wird.

Zum Abschluss des erfindungsgemäßen Verfahrens wird der Kolbenkörper 130 fertig bearbeitet, wie es für das Ausführungsbeispiel gemäß den Figuren 1 bis 4 beschrieben wurde. Im Ergebnis wird ein Kolben gemäß Figur 1 erhalten.

## Patentansprüche

1. Verfahren zur Herstellung eines Kolbens (10) für einen Verbrennungsmotor mit einem Kolbengrundkörper (11) und einem Kolbenringteil (17), wobei der Kolbengrundkörper (11) eine einen Dom (13) aufweisende Verbrennungsmulde (12) sowie mit Nabenbohrungen (15) versehene Kolbennaben (14) aufweist, welche über Laufflächen (16) miteinander verbunden sind, wobei das Kolbenringteil (17) einen Kolbenboden (18), einen umlaufenden Feuersteg (19) sowie eine umlaufende Ringpartie (21) aufweist, und wobei der Kolbengrundkörper (11) und das Kolbenringteil (17) einen umlaufenden Kühlkanal (22) bilden, mit den folgenden Verfahrensschritten:
a) Herstellen eines Rohlings (11',) des Kolbengrundkörpers (11) mittels eines Umformverfahrens,
b) Herstellen eines Rohlings (17') des Kolbenringteils (17) mittels eines Umformverfahrens oder eines Gießverfahrens,
c) Vorbearbeiten der Rohlinge (11', 17') unter Fertigbearbeitung von Schweißflächen (26, 28; 27, 29);
d) Verbinden der vorbearbeiteten Rohlinge (11'', 111', 17") von Kolbengrundkörper (11) und Kolbenringteil (17) zu einem Kolbenkörper (30, 130) mittels eines Schweißverfahrens,
e) Nachbearbeiten und/oder Fertigbearbeiten des Kolbenkörpers (30, 130) zum fertigen Kolben (10);
**dadurch gekennzeichnet, dass** in Schritt a) bei der Herstellung des Rohlings (11') des Kolbengrundkörpers (11) die Kontur der Verbrennungsmulde (12) außerhalb eines Dombereichs (13a, 113a) fertig hergestellt wird, dass überschüssiger Werkstoff (23, 123) im Dombereich (113a) der Verbrennungsmulde (12) gebildet wird, und dass in Schritt e) der überschüssige Werkstoff (23, 123) im Dombereich (13a, 113a) der Verbrennungsmulde (12) in einer solchen Menge entfernt wird, dass ein vorbestimmtes Volumen der Verbrennungsmulde (12) resultiert.

2. Verfahren nach Anspruch 1, **dadurch gekennzeichnet, dass** in Schritt e) zur Kontrolle des Volumens der Verbrennungsmulde (12) während der Entfernung des überschüssigen Werkstoffs (23, 123) im Dombereich (13a, 113a) der aktuelle tiefste Punkt (P1, P11) der Verbrennungsmulde (12) erfasst wird und daran eine senkrecht zur Kolbenmittelachse verlaufende Ebene (E) angelegt wird, welche als Ausgangspunkt für die anschließende Fertigbearbeitung des Kolbenbodens (18) verwendet wird.

3. Verfahren nach Anspruch 1, **dadurch gekennzeichnet, dass** in Schritt c) Kühlkanalbereiche (22a, 22b) in die Rohlinge (11', 17') eingebracht und/oder fertig bearbeitet werden.

4. Verfahren nach Anspruch 1, **dadurch gekennzeichnet, dass** in Schritt c) im Rohling (11') des Kolbengrundkörpers (11) der Innenraum (24) fertig bearbeitet wird und in den Kühlkanalbereich (22a) Zu- und Ablauföffnungen für Kühlöl eingebracht werden.

5. Verfahren nach Anspruch 1, **dadurch gekennzeichnet, dass** in Schritt c) am Rohling (11'; 17') des Kolbengrundkörpers (11) und/oder des Kolbenringteils (17) der Außendurchmesser vorbearbeitet wird und/oder dass am Rohling (17') des Kolbenringteiles (17) der Kolbenboden (18) vorbearbeitet oder fertigbearbeitet wird und/oder dass am Rohling (11') des Kolbengrundkörpers (11) die Kolbennaben (14) vorbearbeitet werden.

6. Verfahren nach Anspruch 1, **dadurch gekennzeichnet, dass** in Schritt e) die Nabenbohrungen (15) in die Kolbennaben (14) eingebracht werden, nachdem der Kolbenboden (18) fertig bearbeitet ist.

7. Verfahren nach Anspruch 1, **dadurch gekennzeichnet, dass** der Rohling (11') des Kolbengrundkörpers (11) mittels Warmumformen bei 1.200°C bis 1.300°C geschmiedet und anschließend kaltkalibriert wird.

8. Verfahren nach Anspruch 1, **dadurch gekennzeichnet, dass** der Rohling (11') des Kolbengrundkörpers (11) mittels Warmumformen bei 1.200°C bis 1.300°C geschmiedet und anschließend bei einer Temperatur von höchstens 150°C kaltumgeformt wird.

9. Verfahren nach Anspruch 1, **dadurch gekennzeichnet, dass** der Rohling (11') des Kolbengrundkörpers (11) mittels Halbwarmumformen bei 600°C bis 900°C geschmiedet wird.

10. Verfahren nach Anspruch 1, **dadurch gekennzeichnet, dass** der Rohling (11') des Kolbengrundkörpers (11) im Anschluss an das Halbwarmumformen bei einer Temperatur von höchstens 150°C kaltumgeformt wird.

11. Verfahren nach Anspruch 1, **dadurch gekennzeichnet, dass** der Rohling (11') des Kolbengrundkörpers (11) mittels Kaltumformen bei höchstens 150°C geschmiedet wird.

## Claims

1. A method for producing a piston (10) for an internal combustion engine, having a piston main body (11) and a piston ring part (17), wherein the piston main body (11) has a combustion depression (12) with a dome (13) and has piston bosses (14) equipped with boss bores (15), which piston bosses are connected to one another by way of running surfaces (16), wherein the piston ring part (17) has a piston crown (18), an encircling fire land (19) and an encircling ring section (21), and wherein the piston main body (11) and the piston ring part (17) form an encircling cooling duct (22), having the following method steps:
a) producing a blank (11') of the piston main body (11) by way of a deformation process,
b) producing a blank (17') of the piston ring part (17) by way of a deformation process or a casting process,
c) pre-machining the blanks (11', 17'), with finish machining of welding surfaces (26, 28; 27, 29) being performed;
d) connecting the pre-machined blanks (11", 111', 17") of piston main body (11) and piston ring part (17) to form a piston body (30, 130) by means of a welding process,
e) performing secondary machining and/or finish machining of the piston body (30, 130) to form the finished piston (10);
**characterized in that**, in step a), during the production of the blank (11') of the piston main body (11), the contour of the combustion depression (12) outside a dome region (13a, 113a) is fully produced, **in that** the excess material (23, 123) is formed in the dome region (113a) of the combustion depression (12), and **in that**, in step e), such an amount of the excess material (23, 123) in the dome region (13a, 113a) of the combustion depression (12) is removed as to result in a predetermined volume of the combustion depression (12).

2. The method as claimed in claim 1, **characterized in that**, in step e), for the inspection of the volume of the combustion depression (12), during the removal of the excess material (23, 123) in the dome region (13a, 113a), the present lowest point (P1, P11) of the combustion depression (12) is detected, and a plane (E) running perpendicularly to the piston central axis is applied to said lowest point, said plane being used as a starting point for the subsequent finish machining of the piston crown (18).

3. The method as claimed in claim 1, **characterized in that**, in step c), cooling duct regions (22a, 22b) are formed into the blanks (11', 17') and/or are finish-machined.

4. The method as claimed in claim 1, **characterized in that**, in step c), in the blank (11') of the piston main body (11), the interior space (24) is finish-machined and inlet and outlet openings for cooling oil are formed into the cooling duct region (22a).

5. The method as claimed in claim 1, **characterized in that**, in step c), on the blank (11', 17') of the piston main body (11) and/or of the piston ring part (17), the outer diameter is pre-machined, and/or **in that**, on the blank (17') of the piston ring part (17), the piston crown (18) is pre-machined or finish-machined, and/or **in that**, on the blank (11') of the piston main body (11), the piston bosses (14) are pre-machined.

6. The method as claimed in claim 1, **characterized in that**, in step e), the boss bores (15) are formed into the piston bosses (14) after the piston crown (18) has been finish-machined.

7. The method as claimed in claim 1, **characterized in that** the blank (11') of the piston main body (11) is forged by hot working at 1200°C to 1300°C and is subsequently subjected to cold calibration.

8. The method as claimed in claim 1, **characterized in that** the blank (11') of the piston main body (11) is forged by hot working at 1200°C to 1300°C and is subsequently subjected to cold working at a temperature of at most 150°C.

9. The method as claimed in claim 1, **characterized in that** the blank (11') of the piston main body (11) is forged by warm working at 600°C to 900°C.

10. The method as claimed in claim 1, **characterized in that** the blank (11') of the piston main body (11) is, after the warm working, subjected to cold working at a temperature of at most 150°C.

11. The method as claimed in claim 1, **characterized in that** the blank (11') of the piston main body (11) is forged by cold working at at most 150°C.

## Revendications

1. Procédé de production d'un piston (10) pour un moteur à combustion interne avec un corps de base de piston (11) et un élément segment de piston (17), dans lequel le corps de base de piston (11) présente un bol de combustion (12) présentant un dôme (13) ainsi que des moyeux de piston (14) pourvus d'alésages de moyeu (15) qui sont raccordés entre eux par le biais de surfaces de portée (16), dans lequel l'élément segment de piston (17) présente une tête de piston (18), un cordon de feu (19) périphérique ainsi qu'une partie annulaire (21) périphérique, et dans lequel le corps de base de piston (11) et l'élément segment de piston (17) forment un canal de refroidissement (22) périphérique, avec les étapes de procédé suivantes consistant à :
a) produire une ébauche (11') du corps de base de piston (11) par un procédé de façonnage,
b) produire une ébauche (17') de l'élément segment de piston (17) par un procédé de façonnage ou un procédé de coulée,
c) pré-usiner des ébauches (11', 17') par finition de surfaces soudées (26, 28 ; 27, 29) ;
d) relier les ébauches pré-usinées (11", 111', 17") du corps de base de piston (11) et de l'élément segment de piston (17) en un corps de piston (30, 130) par un procédé de soudage,
e) assurer l'usinage ultérieur et/ou la finition du corps de piston (30, 130) pour former un piston fini (10) ;
**caractérisé en ce qu'**à l'étape a) lors de la production de l'ébauche (11') du corps de base de piston (11) le contour du bol de combustion (12) est fini en dehors d'une zone de dôme (13a, 113a), que du matériau excédentaire (23, 123) est formé dans la zone de dôme (113a) du bol de combustion (12), et qu'à l'étape e) le matériau excédentaire (23, 123) est retiré dans la zone de dôme (13a, 113a) du bol de combustion (12) dans une quantité qui permette d'obtenir un volume prédéterminé du bol de combustion (12).

2. Procédé selon la revendication 1, **caractérisé en ce qu'**à l'étape e) pour la commande du volume du bol de combustion (12) pendant le retrait du matériau excédentaire (23, 123) dans la zone de dôme (13a, 113a) le point actuel le plus bas (P1, P11) du bol de combustion (12) est détecté et un plan (E) s'étendant perpendiculairement à l'axe médian de piston est posé dessus, lequel est utilisé comme point de départ pour la finition consécutive de la tête de piston (18).

3. Procédé selon la revendication 1, **caractérisé en ce qu'**à l'étape c) des zones de canal de refroidissement (22a, 22b) sont introduites et/ou finies dans les ébauches (11', 17').

4. Procédé selon la revendication 1, **caractérisé en ce qu'**à l'étape c) dans l'ébauche (11') du corps de base de piston (11) l'espace intérieur (24) est fini et des ouvertures d'entrée et de sortie pour de l'huile de refroidissement sont introduites dans la zone de canal de refroidissement (22a).

5. Procédé selon la revendication 1, **caractérisé en ce qu'**à l'étape c) sur l'ébauche (11' ; 17') du corps de base de piston (11) et/ou de l'élément segment de piston (17) le diamètre extérieur est pré-usiné et/ou que sur l'ébauche (17') de l'élément segment de piston (17) la tête de piston (18) est pré-usinée ou finie et/ou que sur l'ébauche (11') du corps de base de piston (11) les moyeux de piston (14) sont pré-usinés.

6. Procédé selon la revendication 1, **caractérisé en ce qu'**à l'étape e) les alésages de moyeu (15) sont introduits dans les moyeux de piston (14) après que la tête de piston (18) soit finie.

7. Procédé selon la revendication 1, **caractérisé en ce que** l'ébauche (11') du corps de base de piston (11) est forgée par façonnage à chaud entre 1200 °C et 1300 °C et est ensuite calibrée à froid.

8. Procédé selon la revendication 1, **caractérisé en ce que** l'ébauche (11') du corps de base de piston (11) est forgée par façonnage à chaud entre 1200°C et 1300°C et ensuite façonnée à froid à une température d'au plus 150 °C.

9. Procédé selon la revendication 1, **caractérisé en ce que** l'ébauche (11') du corps de base de piston (11) est forgée par façonnage à mi-chaud entre 600 °C et 900 °C.

10. Procédé selon la revendication 1, **caractérisé en ce que** l'ébauche (11') du corps de base de piston (11) est façonnée à froid suite au façonnage à mi-chaud à une température d'au plus 150 °C.

11. Procédé selon la revendication 1, **caractérisé en ce que** l'ébauche (11') du corps de base de piston (11) est forgée par façonnage à froid à au plus 150 °C.
